Europäisches Patentamt

European Patent Office

Office européen des brevets

(19)

(11) EP 0 741 489 A1

(12) EUROPEAN PATENT APPLICATION

(43) Date of publication:
06.11.1996 Bulletin 1996/45

(51) Int. Cl.⁶: H04N 1/41

(21) Application number: 96107420.0

(22) Date of filing: 31.08.1993

(84) Designated Contracting States:
DE FR GB

(30) Priority: 26.11.1992 JP 316759/92

(62) Application number of the earlier application in
accordance with Art. 76 EPC: 93113923.2

(71) Applicant: MITSUBISHI DENKI KABUSHIKI
KAISHA
Tokyo 100 (JP)

(72) Inventor: Oka, Kenichiro
c/o Mitsubishi Denki K. K.
Fukuyama-shi Hiroshima (JP)

(74) Representative: KUHNEN, WACKER & PARTNER
Alois-Steinecker-Strasse 22
85354 Freising (DE)

Remarks:
This application was filed on 09 - 05 - 1996 as a
divisional application to the application mentioned
under INID code 62.

(54) Image encoding/decoding method

(57) An encoding method of a GBTC type that encoded data and decoded data have a fixed length, which can provide an encoding/decoding method which, in encoding or decoding, is capable of performing editing processings to rotate an original image in 90° and to rotate it inversely with respect to up and down, right and left. When encoded data in each of blocks of an original image and level specification signals $\phi_{ij}$ of respective pixels in each block are written into a memory or are read out therefrom, the encoded data and the pixel level specification signal are arranged in such a manner that they can be rotated or inversely rotated an integral number of times 90°.

FIG. 5

**Description**

BACKGROUND OF THE INVENTION

The present invention relates to an image encoding method which is suitable for processing an image having multi-tone gradations as well as an image encoding/decoding method which is capable of editing an image while it is encoded data.

As a conventional block truncation encoding method which divides image data into a plurality of blocks each consisting of a plurality of pixels and approximates the image data by a small number of representative gradations in each of the blocks, for example, there is known a method which is disclosed in unexamined Japanese Patent Publication (Kokai) Hei-1-188166.

The procedures of the conventional encoding method are as follows:

(1) An image is divided into a plurality of blocks each consisting of a plurality of pixels.

(2) In each block, there is found a difference D between the maximum value of gradation levels Lmax and the minimum value thereof Lmin, that is, $D=Lmax-Lmin$ , and the resultant differences D are classified into the following three kinds of encoding modes:

Mode A:   when D is small;
          Pixels in the block are quantized to 1 level.
Mode B:   when D is comparatively large;
          Pixels in the block are quantized to 2 level.
Mode C:   when D is large;
          Pixels in the block are quantized to 4 level.

(3) When the quantized level is 1 level, then an average value is used; when 2 level, then the respective representative values of a pixel group larger than the average value and a pixel group smaller than the average value are used; and, when 4 level, then 4 values at regular distances and corresponding to gradation distributions in the block are used.

(4) Each of the blocks is designated by a reference level La for regulating the quantization level in the block, a level distance Ld, and a level specifying signal (2 bits/pixel) for regulating a quantization level for every pixel.

(5) The level specifying signal is connected between the blocks to be converted into two bit plane images ($\phi$1, $\phi$2), and are then encoded by use of binary image codes such as MMR (CCITT/T. 6) or the like, respectively. Also, the level distance Ld is encoded by use of a variable length code, and the reference level La encodes a difference between the blocks by use of a variable length code.

Also, according to the conventional encoding method, there are employed the following several means in order to enhance an encoding efficiency:

(1) The encoding modes are classified into 3 kinds according to the differences between the maximum and minimum values of the gradation level of the pixels in each of the blocks to change the quantizing level number.

(2) The level specifying signal is converted into the two bit plane images and the two bit plane images are respectively encoded in terms of codes for binary images.

(3) The level distance Ld is encoded in terms of a variable length code.

(4) The reference level La encodes a difference between the blocks by use of a variable length code.

In the variable length codes encoded in a block unit in this manner, the code data length thereof varies in the respective blocks. Therefore, it is difficult to take out an arbitrary block from the code data group for the purpose of image editing. Further, due to the fact that the reference level La is encoded by a difference between the blocks in a variable length code, even if only the codes in an arbitrary block are taken out, they cannot be decoded but the codes must be decoded sequentially from the first block in the same order as they are encoded.

As an encoding method to solve the above problems, there is known an encoding method of a GBTC (Generalized Block Truncation Coding) type which is disclosed in the draft of a meeting for reading papers of the Institute of Image Electronics Engineers of Japan, "evaluation of an image compression method in a hard copy device" by Kenichiro Oka and Masuru Onishi, April 1, 1991, the content of which being substantially equal to that of "Implementation of image compression for printers" by Kenichiro Oka and Masuru Onishi (preprinted from "Color Hard Copy and Graphics Arts", Proceedings Preprint, SPIE - The International Society for Optical Engineering, 11-14 February 1992, San Jose, California). Description will be given below of this encoding method.

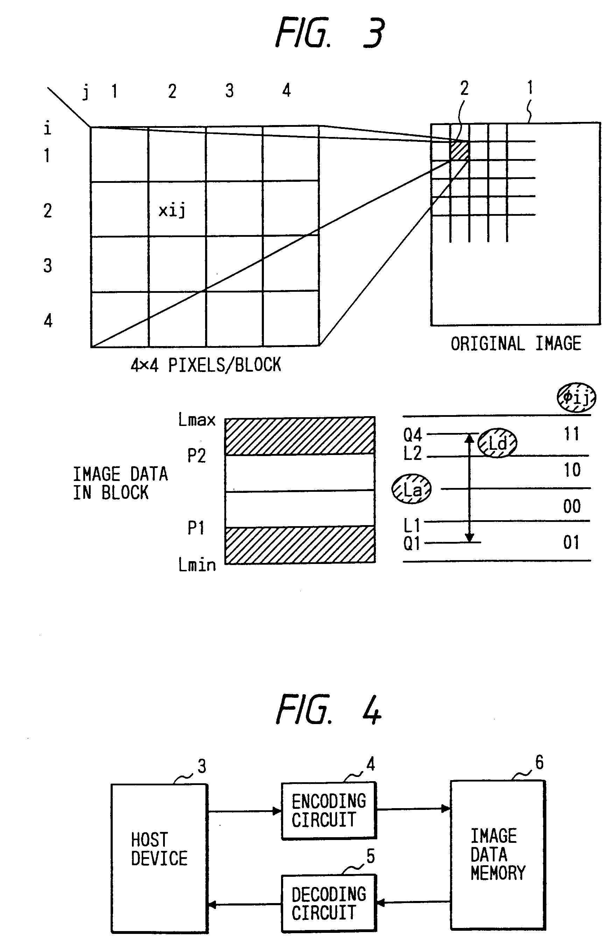

In Fig. 3, there is shown an explanatory view of the above encoding method of a GBTC type. In Fig. 3, reference character 1 designates an original image; 2, a block which is composed of a square consisting of 4x4 pixels; $X_{ij}$ ($i, j = 1, 2, 3, 4$), a piece of pixel data (which will be hereinafter called "$X_{ij}$"); and $\phi_{ij}$ ($i, j = 1, 2, 3, 4$), a level specification signal (which will be hereinafter referred to as "$\phi_{ij}$").

In Tables 1 and 2, there are shown an algorithm of a conventional GBTC type encoding method in which encoded data respectively have a fixed length.

[TABLE 1]

| GBTC type encoding algorithm |
|---|
| ```
P1 = (Lmax + 3Lmin)/4
P2 = (3Lmax + Lmin)/4
Q1 = mean value of all Xij (Xij ≤ P1)
Q4 = mean value of all Xij (Xij > P2)
La = (Q1 + Q4)/2
Ld = Q4 - Q1
L1 = La - Ld/4
L2 = La + Ld/4
for (i = 1, 2, 3, 4)
   for (i = 1, 2, 3, 4)
      if Xij ≤ L1          φij = 01 (binary)
      else if Xij ≤ La     φij = 00 (binary)
      else if Xij ≤ L2     φij = 10 (binary)
      else                 φij = 11 (binary)
      end if
   end for
end for
``` |

[TABLE 2]

| GBTC type decoding algorithm |
|---|
| ```
for (i = 1, 2, 3, 4)
   for (i = 1, 2, 3, 4)
      if φij = 01          Yij = La - Ld/2
      else if φij = 00     Yij = La - Ld/6
      else if φij = 10     Yij = La + Ld/6
      else                 Yij = La + Ld/2
      end if
   end for
end for
``` |

Fig. 4 is a block circuit diagram of a signal process system using the above encoding method, in which reference numeral 3 designates a host device; 4, an encoding circuit; 5, a decoding circuit 5; and 6, an image data memory (which will be hereinafter called a memory).

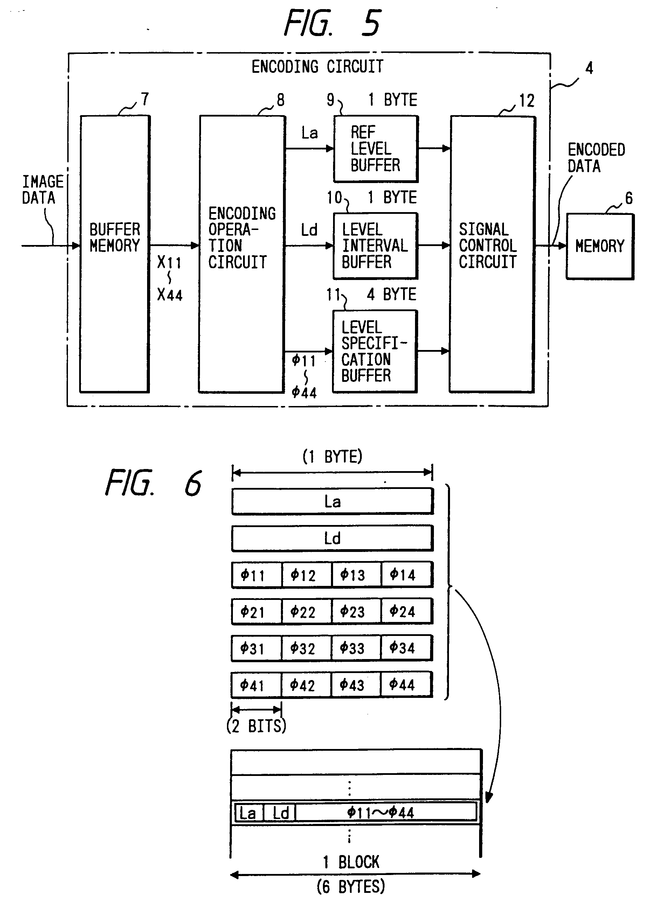

Also, Fig. 5 is a block circuit diagram of the encoding circuit 4, in which reference numeral 7 designates a buffer memory; 8, an encoding operation circuit; 9, a reference level buffer; 10, a level interval buffer; 11, a level specification signal buffer; and 12, a signal control circuit.

Next, description of the encoding method will be given below. In the conventional encoding method, it is assumed that the pixel data $X_{ij}$ is composed of 1 byte. The original image 1 is divided into blocks 2 each consisting of 4x4 pixels, and each of the blocks is then encoded. That is, at first, it is divided between the maximum value Lmax and minimum value Lmin pixels in each block 2 into four equal parts, in which at quarter value from the bottom is expressed as P1 while a quarter value from the top is expressed as P2. Next, the average value of pixels values ranging from Lmin up to P1 is expressed as Q1, while the mean value of pixel values ranging from Lmax down to P2 is expressed as Q4.

Then, the reference level La of the block is found according to the following equation:

$$La = (Q1 + Q4)/2$$

And, the level interval Ld is found according to the following equation:

$$Ld = Q4 - Q1$$

After then, the level interval Ld is divided into four equal parts, in which a quarter value from the bottom is expressed as L1 while a quarter value from the top is expressed as L2. Next, with L1, La and L2 as the threshold values thereof, 16 pixels within the block are respectively quantized in the following manner:

When $Lmin \leq xij \leq L1$, $\phi ij = 01$ (binary value);

When $L1 < xij \leq La$, $\phi ij = 00$ (binary value);

When $La < xij \leq L2$, $\phi ij = 10$ (binary value);

When $L2 < xij \leq Lmax$, $\phi ij = 11$ (binary value).

Now, description will be given below of the operation of the encoding circuit 4 with reference to Figs. 5 and 6. In Fig. 5, the image data corresponding to 4 lines is once stored in the buffer memory 7 and are then transmitted to the encoding operation circuit 8 by blocks, in which La, Ld, and $\phi 11$ to $\phi 44$ are found according to such a procedure as described above. The thus found La, Ld and $\phi 11$ to $\phi 44$ are then sent respectively through the reference level buffer 9, level interval buffer 10 and level specification signal buffer 11 to the signal control circuit 12, in which they are collected as code data by blocks as shown in Fig. 6.

The code data is written in the memory 6 in the form of a code system arranged in such a manner as shown in Fig. 6. If 1 byte is allocated to La, 1 byte is allocated to Ld, and 2 bits are allocated to each of $\phi 11$ to $\phi 44$, then the length of the encoded data belonging to 1 block is 6 bytes. In this manner, the code length of each block is a fixed length of 6 bytes, so that it is simple to take out the code data of an arbitrary block from the code system.

Fig. 7 is a block diagram of the decoding circuit 5 shown in Fig. 4, in which reference numeral 14 stands for a signal distribution circuit; 15, a reference level buffer; 16, a level interval buffer; 17, a level specification signal buffer; 18, a decoding operation circuit; and 19, a buffer memory, respectively.

Fig. 8 is an explanatory view of a conventional GBTC type decoding method shown in Table 2, in which reference character yij (i, j = 1, 2, 3, 4) stands for decoded pixel data.

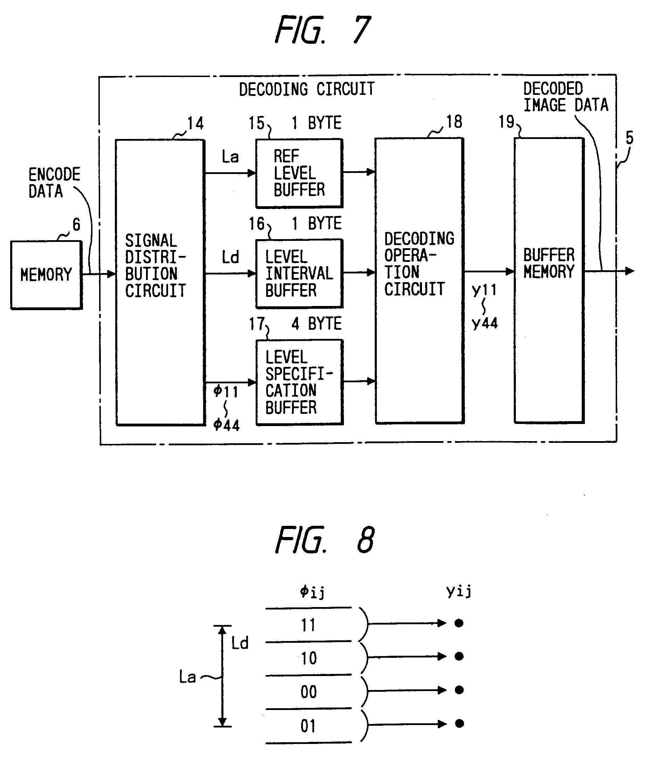

Next, the conventional decoding method will be described below. In this method, as shown in Fig. 8, a piece of encoded data is composed of La, Ld, and $\phi ij$. On the basis of these parameters, the following operation is performed to thereby find the decoded pixel data yij.

When $\phi ij = 01$, then $yij = La - Ld/2$

When $\phi ij = 00$, then $yij = La - Ld/6$

When $\phi ij = 10$, then $yij = La + Ld/6$

When $\phi ij = 11$, then $yij = La + Ld/2$

Next, description will be given below of the operation of the decoding circuit 5. In Fig. 7, encoded data in 1 block are divided by the signal distribution circuit 14 into La, Ld, and $\phi 11$ to $\phi 44$, the three kinds of signals are respectively distributed to the reference level buffer 15, level interval buffer 16, and level specification signal buffer 17, the decoded pixel data yij is computed by the decoding operation circuit 18, the decoded pixel data yij is written into the buffer memory 19 every block, and the decoded pixel data yij is outputted every 4 lines.

SUMMARY OF THE INVENTION

The present invention aims at eliminating the above problems found in the conventional GBTC type encoding method.

It is an object of the invention to provide an encoding/decoding method which, in encoding or decoding, is able to perform an editing processing to rotate an image in 90° unit or an editing processing to turn the image upside down or turn inversely the right and left of the image.

The image encoding method of the invention is an encoding method of a fixed length GBTC type.

In the image encoding/decoding method according to the invention, in encoding, the encoded data in each of the blocks and the level specification signals of the respective pixels in each of the blocks are arranged in a memory in such a manner that they can be respectively rotated forwardly or inversely by an integral number of times 90° according to cases.

Also, in decoding, when the encoded data of the respective blocks and the level specification signals of the respective pixels in each of the blocks are taken out from the memory, they are respectively read out so that they can be arranged in such a manner that they can be rotated forwardly or inversely an integral number of times 90°.

Also, in the image encoding/decoding method of the invention, in encoding, the code data and the level specification signals in the respective blocks are arranged in such a manner that they can be rotated forwardly or inversely an integral number of times 90° according to cases, which makes it possible to edit an image in encoding.

Further, in decoding, the code data and the level specification signals in the respective blocks are arranged in such a manner that they can be rotated forwardly or inversely an integral number of times 90° according to cases, which makes it possible to edit an image in decoding.

BRIEF DESCRIPTION OF THE DRAWINGS

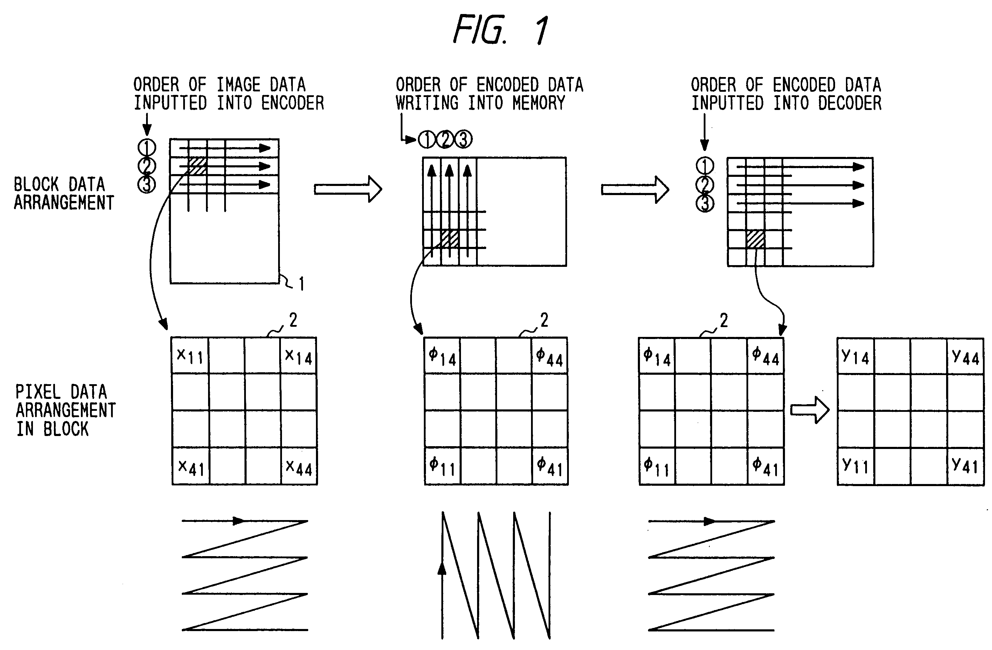

Fig. 1 is an explanatory view of a case in which an image editing processing is executed at the encoding stage of the embodiment 1 of the invention;

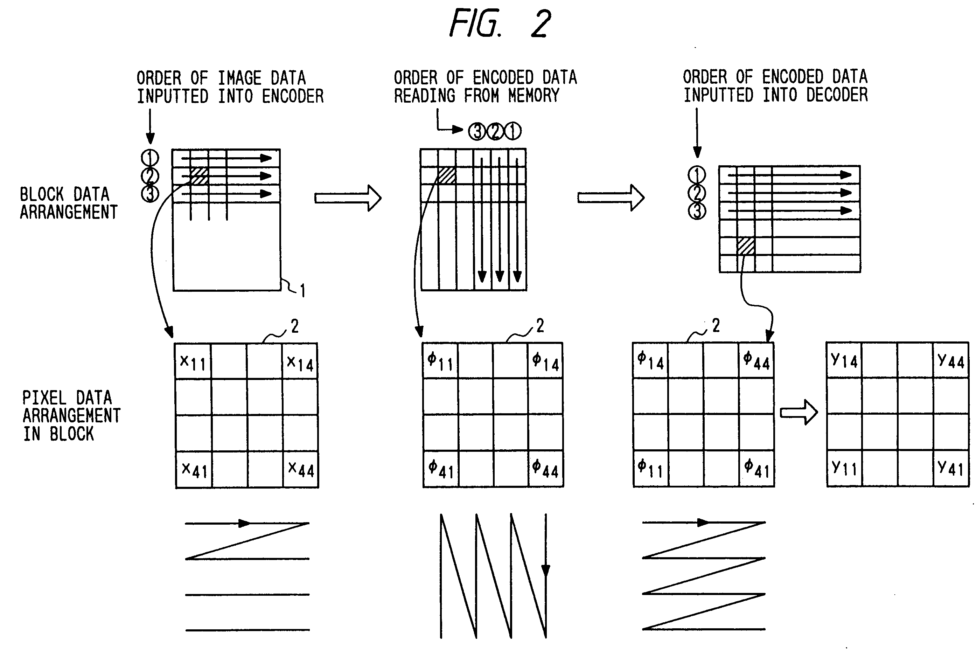

Fig. 2 is an explanatory view of a case in which an image editing processing is executed at the decoding stage of the embodiment 2 of the invention;

Fig. 3 is an explanatory view of a conventional encoding method of a fixed length GBTC type;

Fig. 4 is a block diagram of an encoding/decoding circuit using the conventional encoding method of a fixed length GBTC type;

Fig. 5 is a block diagram of an encoding circuit using an encoding method of a fixed length GBTC type;

Fig. 6 is an explanatory view of the arrangement of the respective parameters and level specification signals as well as the code system in reading according to the encoding method of a fixed length GBTC type;

Fig. 7 is a block diagram of a decoding circuit using an encoding method of a fixed length GBTC type; and,

Fig. 8 is an explanatory view of a decoding method of a fixed length GBTC type.

DETAILED DESCRIPTION OF PREFERRED EMBODIMENTS

Embodiment 1.

In Fig. 1, there is shown another embodiment, namely, embodiment 1 of an image encoding/decoding method according to the invention in which an operation of editing an image is executed at an encoding stage, specifically in this case, by rotating the image to the left 90°. In writing the encoded data into the memory 6, the encoded data are not written in the order that they are inputted, but the data are rearranged in such a manner that the 90° left rotation editing is included. In particular, the mutual data arrangement between blocks is made in such a manner as shown in Fig. 1. That is, in writing into the memory 6 the encoded data of an original image that are sequentially inputted by scanning the image from left top to the right direction, from top down to bottom, the data are rearranged sequentially by scanning the image from left bottom to the upper left direction, from left to right, before they are written into the memory 6. Similarly, $\phi$ij are rearranged in such a manner as shown in Fig. 1. When decoding the encoded data arranged in the above manner, if they are decoded in a normal manner, that is, if they are read out sequentially by scanning the image from left top to the right direction, from top to bottom, then the reproduced image is rotated left 90° relative to its original image.

To rotate the original image left 180°, the figures of Fig. 1 may be rotated left further 90° and, in this arrangement, the block data and pixel data may be written into the memory 6 and then the data may be read out in the same order as shown in the right-most figures. And, to rotate the original image left 270°, the figures of Fig. 1 may be rotated left 180°.

In the embodiment 1, there is shown a case in which an image is rotated left an integral number of times 90°. However, the invention is not limited to this, but it can similarly apply to other cases in which the image is rotated right or is turned upside down or vice versa. Further, the invention can similarly apply to an editing processing which includes a combination of the image right and left rotation with the up-and-down and right-and-left inversed rotations.

Embodiment 2

In Fig.2, there is shown a still further embodiment, that is, embodiment 2 according to the invention, in which an image editing processing is executed at a decoding stage. Specifically, in the embodiment 2, there is shown a case in which an original image is rotated left 90°. In the embodiment 2 when reading out the encoded data from the memory 6, the encoded data are not read out in the order that they have been written there, but the data are to be rearranged in such a manner that a 90° left rotation editing can be included. Concretely, the mutual data arrangement between the blocks is changed in such a manner as shown in Fig. 2. That is, in writing, the encoded data are inputted in the order that the image is scanned sequentially from left top to the right direction, from top to down, while in reading the data are rearranged by scanning sequentially from right top to the downward direction, from right to left. The pixel data $\phi ij$ are similarly rearranged as shown in Fig. 2. If the thus read-out encoded data are decoded, then the reproduced image is found that it is rotated 90° with respect to its original image.

To rotate an original image left 180°, 270°, and to rotate it inversely with respect to up and down and right and left, the data of the original image may be read out from the memory 6 by changing the image scanning order.

In the above-mentioned embodiments, each of the blocks is considered as a square having 4x4 pixels. However, the shape and number of pixels of each block are not limited to this. In this case, the buffer memory 7 for storing the data before encoded and the buffer memory 19 for storing the data after encoded may be respectively constructed such that they have the number of lines that matches the size of the block.

Also, although in the embodiments, the amount of data of 1 pixel is 8 bits, the data amount may be different. Further, the reference level La and level interval Ld are respectively allocated l byte and level specification signals $\phi 11$ to $\phi 44$ are respectively allocated 2 bits. However, other different arrangements may be employed for fixing the length of the codes.

To the memory 6 in the encoding/decoding device shown in Fig.4, there can be applied a secondary storage medium such as a semiconductor memory, a magnetic disk or the like. Also, as a system which uses the present encoding method, there is available an image data base or the like.

In Fig. 4, the encoding circuit 4 and decoding circuit 5 are disposed externally of the memory 6. However, they can be incorporated integrally in the memory 6. Also, both of the encoding circuit 4 and decoding circuit 5 may be incorporated in the host device 3.

In the embodiments 2 and 3, there is shown a case in which an image is rotated left an integral number of times 90°. However, the invention is not limited to this but it can similarly apply to right rotation, up-and-down inverted rotation, right-and-left inverted rotation and the like. Further, the invention can similarly apply to an editing processing which combines the right and left rotation with the up-and-down and right-and-left inverted rotations.

As has been described heretofore, according to the invention, there is provided an image encoding method in which the data length is fixed with respect to the reference level signal, level interval signal and level specification signal and, as the whole of the codes, every block has a fixed length.

Also, according to the image encoding/decoding method of the invention, in encoding, the coded data in the respective blocks and the level specification signals of the respective pixels in the respective blocks to be written into the memory are arranged such that the coded data and specification signals can be respectively rotated or inversely rotated an integral number of times 90°, which makes it possible to edit an image in encoding.

Further, in decoding, the encoded data in the respective blocks and the level specification signals of the respective pixels in the respective blocks written into the memory in the order of generation are read out in a scanning pattern which, according to cases, allows the data and signals to be rotated or inversely rotated an integral number of times 90°, so that it is possible to edit an image in decoding.

## Claims

1. An image encoding/decoding method comprising the steps of:

   dividing an original image into a plurality of blocks and setting representative gradation levels respectively representing the gradation levels of the respective pixels in each of said blocks;

   calculating reference levels for the respective blocks from the representative gradation levels of the respective pixels;

   setting level intervals obtained by classifying the distribution range of the representative gradation levels of the respective pixels in each of said blocks into a given number;

   creating level specification signals respectively indicating to which one of said set classes each of said representative gradation levels of said respective blocks belongs;

encoding said reference level signals, level interval signals and level specification signals into data of a fixed length independently of one another; and

calculating decoded pixel data from said reference level signals, level interval signals and level specification signals, characterized in that

when said encoded data in each of said blocks and said level specification signals of the respective pixels in each of said blocks are read out from said original image as pixel data, said data and signals are written into a memory in such a scanning order that they can be rotated or inversely rotated an integral of times 90° according to cases.

2. An image encoding/decoding method comprising the steps of:

dividing an original image into a plurality of blocks and setting representative gradation levels respectively representing the gradation levels of the respective pixels in each of said blocks;

calculating reference levels for the respective blocks from the representative gradation levels of the respective pixels;

setting level intervals obtained by classifying the distribution range of the representative gradation levels of the respective pixels in each of said blocks into a given number;

creating level specification signals respectively indicating to which one of said set classes each of said representative gradation levels of said respective blocks belongs;

encoding said reference level signals, level interval signals and level specification signals into data of a fixed length independently of one another; and

calculating decoded pixel data from said reference level signals, level interval signals and level specification signals, characterized in that

when said encoded data of said respective blocks and said level specification signals of the respective pixels in said respective blocks are read out from a memory in which said encoded data and said specification signals are written, they are read out in such a scanning order that they can be rotated or inversely rotated an integral number of times 90° according to cases.

**FIG. 1**

BLOCK DATA ARRANGEMENT

ORDER OF IMAGE DATA INPUTTED INTO ENCODER

ORDER OF ENCODED DATA WRITING INTO MEMORY

ORDER OF ENCODED DATA INPUTTED INTO DECODER

PIXEL DATA ARRANGEMENT IN BLOCK

$x_{14}$   $x_{44}$
$x_{11}$   $x_{41}$

$\phi_{44}$   $\phi_{41}$
$\phi_{14}$   $\phi_{11}$

$\phi_{44}$   $\phi_{41}$
$\phi_{14}$   $\phi_{11}$

$y_{44}$   $y_{41}$
$y_{14}$   $y_{11}$

8

# FIG. 2

ORDER OF IMAGE DATA
INPUTTED INTO ENCODER

ORDER OF ENCODED DATA
READING FROM MEMORY

ORDER OF ENCODED DATA
INPUTTED INTO DECODER

③②①

BLOCK DATA
ARRANGEMENT

①
②
③

①
②
③

PIXEL DATA
ARRANGEMENT
IN BLOCK

| $x_{11}$ | | | $x_{14}$ |
|---|---|---|---|
| | | | |
| | | | |
| $x_{41}$ | | | $x_{44}$ |

| $\phi_{11}$ | | | $\phi_{14}$ |
|---|---|---|---|
| | | | |
| | | | |
| $\phi_{41}$ | | | $\phi_{44}$ |

| $\phi_{14}$ | | | $\phi_{44}$ |
|---|---|---|---|
| | | | |
| | | | |
| $\phi_{11}$ | | | $\phi_{41}$ |

| $y_{14}$ | | | $y_{44}$ |
|---|---|---|---|
| | | | |
| | | | |
| $y_{11}$ | | | $y_{41}$ |

EP 0 741 489 A1

## FIG. 3

4×4 PIXELS/BLOCK

ORIGINAL IMAGE

IMAGE DATA IN BLOCK

## FIG. 4

## FIG. 5

ENCODING CIRCUIT

IMAGE DATA →

BUFFER MEMORY `7`

X11 〜 X44 →

ENCODING OPERATION CIRCUIT `8`

La → REF LEVEL BUFFER `9` 1 BYTE →

Ld → LEVEL INTERVAL BUFFER `10` 1 BYTE →

φ11 〜 φ44 → LEVEL SPECIFICATION BUFFER `11` 4 BYTE →

SIGNAL CONTROL CIRCUIT `12`

→ ENCODED DATA → MEMORY `6`

`4`

## FIG. 6

(1 BYTE)

| La |
| Ld |

| φ11 | φ12 | φ13 | φ14 |
| φ21 | φ22 | φ23 | φ24 |
| φ31 | φ32 | φ33 | φ34 |
| φ41 | φ42 | φ43 | φ44 |

(2 BITS)

| La | Ld | φ11〜φ44 |

1 BLOCK
(6 BYTES)

# FIG. 7

DECODING CIRCUIT

DECODED IMAGE DATA

ENCODE DATA

6 MEMORY

14 SIGNAL DISTRIBUTION CIRCUIT

La → 15 1 BYTE REF LEVEL BUFFER

Ld → 16 1 BYTE LEVEL INTERVAL BUFFER

φ11 〜 φ44 → 17 4 BYTE LEVEL SPECIFICATION BUFFER

18 DECODING OPERATION CIRCUIT

y11 〜 y44

19 BUFFER MEMORY

5

# FIG. 8

$\phi_{ij}$          $y_{ij}$

La ⎰ Ld ⎱ 11 →  ●
10 →  ●
00 →  ●
01 →  ●

European Patent
Office

**EUROPEAN SEARCH REPORT**

Application Number

EP 96 10 7420

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 261 561 (FREDERIKSEN & SHU LABORATORIES, INC.) 30 March 1988 <br> * abstract; figures 2,3 * <br> * column 6, line 36 - column 10, line 15 * <br> --- | 1,2 | H04N1/41 |
| D,A | PATENT ABSTRACTS OF JAPAN <br> vol. 13, no. 481 (E-838), 31 October 1989 <br> & JP-A-11 088166 (NIPPON TELEGR & TELEPH CORP <NTT>), 27 July 1989, <br> * abstract * <br> --- | 1,2 | |
| P,A | EP-A-0 549 309 (XEROX CORPORATION) 30 June 1993 <br> * abstract * <br> ----- | 1,2 | |
| | | | TECHNICAL FIELDS SEARCHED (Int.Cl.6) <br><br> H04N <br> G06F |

The present search report has been drawn up for all claims

| Place of search | Date of completion of the search | Examiner |
|---|---|---|
| THE HAGUE | 28 August 1996 | Revellio, H.S. |